# FASCICULE DE BREVET EUROPEEN

(11) **EP 2 431 443 B1**
(45) Date de publication et mention de la délivrance du brevet: **06.03.2019**
(21) Numéro de dépôt: 11181755.7
(22) Date de dépôt: 19.09.2011
(51) Int. Cl.: C09K 8/584, C09K 8/588, C02F 5/02

(54) **Procédé amélioré de récupération assistée du pétrole utilisant la technique dite ASP**
Verbessertes Verfahren für die unterstützte Rückgewinnung von Erdöl unter Anwendung der sogenannten ASP-Technik
Enhanced method for assisted recovery of petroleum using the technique known as ASP

(30) Priorité: 20.09.2010 FR 1057479
(43) Date de publication de la demande: 21.03.2012
(73) Titulaire: S.P.C.M. SA, 42160 Andrézieux Bouthéon (FR)
(72) Inventeur: Pich, René, 42270 SAINT PRIEST EN JAREZ (FR); Gil, Ludwig, 42000 SAINT ETIENNE (FR)
(74) Mandataire: Lavoix

(56) Documents cités:
- CN-A- 1 749 185
- FR-A1- 2 920 818
- US-A- 4 714 113
- US-A1- 2009 151 941

## Description

La présente invention concerne le domaine technique de la récupération assistée du pétrole dans un gisement. Plus précisément, la présente invention a pour objet un procédé amélioré de récupération assistée du pétrole utilisant la technique dite ASP (pour « alcalin - surfactant - polymère ») selon laquelle une solution alcaline d'un polymère hydrosoluble contenant au moins un agent tensioactif est injectée dans le gisement. Le procédé selon l'invention permet de limiter les risques dus à la présence d'ions Ca²⁺ et Mg²⁺ dans les eaux utilisées pour la préparation de la solution aqueuse injectée.

La récupération assistée du pétrole peut se faire avec des procédés divers : injection de solvant, CO₂, vapeur, courants électriques, ultrasons... mais dans le cas de champs de pétrole à température assez faible, la modification de mobilité par injection de polymère s'avère la plus simple et la moins chère.

Il est connu dans l'art antérieur que les polymères hydrosolubles synthétiques et, en particulier, les polymères à base d'acrylamide sont des polymères très avantageux pour augmenter la viscosité de solutions aqueuses. L'augmentation de la viscosité de la solution aqueuse injectée par un polymère hydrosoluble de poids moléculaire élevé va permettre de rendre les mobilités de l'eau et du pétrole en place plus ou moins égales.

Dans ce procédé, seul le volume du réservoir traité entre en jeu par un élargissement du bulbe de balayage, correspondant à la zone balayée par la solution injectée.

Un tel procédé de récupération assistée du pétrole présente plusieurs variantes qui ont été développées pour tenter d'améliorer la quantité de pétrole récupérée.

Des théories récentes se basant sur la viscoélasticité des polymères de très hauts poids moléculaire ont impliqué une amélioration de la récupération intrinsèque, mais ces théories ne s'appliquent qu'à des polymères de laboratoire ou ceux peu dégradés dans le champ, ce qui n'est pas le cas dans la plupart des projets industriels actuels.

Pour mobiliser plus de pétrole en place, il a également été envisagé de changer les tensions interfaciales eau - pétrole et d'émulsionner une partie du pétrole non mobilisé par le polymère seul. Dans ce cas, l'ajout d'un agent surfactant (également nommé tensioactif) permet de réduire la tension superficielle entre le pétrole brut emprisonné dans la formation souterraine et la solution injectée. Cette baisse de tension superficielle permet, ainsi, à la solution injectée de pénétrer profondément dans la formation souterraine et d'être en contact avec le pétrole. Un tel procédé nommé SP (Surfactant - Polymère) est utilisé sur un nombre de projets limités car la quantité de surfactant nécessaire peut être très importante (souvent 5 à 15 fois la quantité de polymère) pour obtenir une tension interfaciale efficace.

Une autre méthode est d'utiliser la salification de l'acidité du pétrole par une base pour atteindre des tensions interfaciales très faibles à l'aide d'un surfactant (< 0,01 mN/m) à un coût compatible avec le prix du pétrole. Dans un tel procédé, nommé ASP pour « alcalin - surfactant - polymère », une faible quantité d'agent tensioactif est présente dans une solution aqueuse alcaline de polymère hydrosoluble qui est injectée dans le puits. L'agent alcalin réagit, alors, avec les composés acides présents dans le pétrole brut, pour former *in situ* des tensioactifs supplémentaires qui participent à la baisse de la tension superficielle. En général, il faut utiliser en moyenne :
- Plus de 2000 ppm de polymère,
- Plus de 2000 ppm de surfactant,
- 5 à 10 000 ppm de base (Carbonate de sodium, Soude, Potasse, Borate de sodium, Bicarbonate de sodium ...).

Evidemment, l'efficacité dépend du taux d'acidité du pétrole qui va changer sa balance hydrophile - hydrophobe en fonction du taux de neutralisation.

L'injection d'une solution alcaline au sein d'un réservoir ou gisement de pétrole n'est pas sans difficulté, du fait de la présence de cations métalliques divalents tels que Ca²⁺, Mg²⁺ ou Ba²⁺ dans l'eau injectée ou dans l'eau déjà présente dans le gisement, qui vont avoir tendance à précipiter, soit dans les zones d'injection et ainsi obstruer les passages pour la solution injectée réduisant drastiquement son injectivité, soit à l'intérieur du gisement. En général, les eaux servant à la préparation des solutions aqueuses injectées contiennent entre 100 et 2000 ppm d'ions Ca²⁺ et Mg²⁺.

Lorsque l'on utilise de la Soude comme base dans un procédé ASP, le Calcium précipité sous forme de Chaux Ca(OH)₂ est assez soluble et le Carbonate de Calcium provenant de la charge en CO₂ des eaux utilisées dans la solution injectée se trouve en faible quantité habituellement, On constate que l'injectivité dans les puits se maintient normalement lorsque le taux de CO₂ n'est pas trop élevé. Cependant, l'augmentation très importante du pH, du fait de l'utilisation de la soude comme agent alcalin pour obtenir l'effet désiré sur la dispersion du pétrole, conduit à une dissolution de la silice formant du Silicate de Sodium soluble. Ce Silicate de Sodium précipite seul ou avec les sels de Magnésium près du puits producteur formant des tartres extrêmement durs dans les pompes de relevage, amenant des casses très fréquentes (8 jours à 2-3 mois) empêchant toute production continue. C'est cette méthode qui avait été développée, par exemple, sur le champ pétrolier de Daqing (Chine) d'une manière massive et abandonnée pour des questions de maintenance des pompes.

Le Carbonate de Sodium est la base la plus utilisée pour neutraliser l'acidité du pétrole et lui permettre de se disperser dans l'eau d'injection avec l'aide d'un surfactant synthétique injecté. Cependant, comme indiqué précédemment, dans la plupart des cas, les eaux d'injection ou les saumures produites par les puits producteurs et traitées pour être injectées, contiennent des quantités de Ca²⁺ et Mg²⁺ importantes, (100 à 2 000 ppm en moyenne) qui précipitent sous forme de Carbonate de Calcium et d'hydroxyde de Magnésium. Ce dernier étant colloïdal, il peut être injecté sans trop de dommage pour le champ. Par contre, le Carbonate de Calcium a tendance à cristalliser dans les zones d'injection diminuant très rapidement l'injectivité jusqu'à la bloquer.

La solution utilisée actuellement pour minimiser ces problèmes de précipitation dus à la présence d'ions métalliques divalents est un adoucissement des eaux à injecter, en particulier avec des résines échangeuses sulfoniques ou carboxyliques suivant la salinité de l'eau. Mais, l'adoucissement nécessite un fort traitement du pétrole se trouvant avec les eaux de production et des régénérations par des saumures pour les résines sulfoniques ou par un acide et une base pour les résines carboxyliques en cas d'eaux à forte salinité.

Une autre solution consiste à complexer les métaux divalents pour éviter leur précipitation, mais le coût de l'opération est prohibitif.

Lorsque l'on utilise le Carbonate de Sodium comme base dans les opérations d'ASP, il peut sembler naturel d'injecter une certaine quantité de dispersant pour éviter la cristallisation dans le champ du Carbonate de Calcium formé. On s'aperçoit cependant qu'aux doses normales de dispersant (10 à 20 ppm) qui permettent de disperser ce Carbonate sous forme fine, le résultat obtenu sur champ est négatif. L'injectivité baisse progressivement.

C'est pour cela qu'une telle méthode est utilisée dans le brevet US 4,714,113 au nom de PPG Industries pour des opérations consistant à boucher, à l'intérieur d'un gisement, les zones de forte perméabilité dans lesquelles la solution injectée s'infiltre préférentiellement (nommées en anglais « water-shut-off »). Le dispersant est injecté avec une solution aqueuse alcaline dans le champ pour boucher par précipitation les renardages qui ont tendance à diminuer l'efficacité de l'injection. La quantité d'agent dispersant est ajustée pour éviter une précipitation prématurée, étant donné que cette précipitation doit se produire à l'intérieur du puits (comme mentionné colonne 5 lignes 23-25).

Il existe donc un besoin pour de nouvelles solutions permettant de réduire les risques de précipitation d'ions Ca²⁺ et Mg²⁺, sous la forme de précipités qui risqueraient de se déposer dans la zone d'injection ou à l'intérieur du gisement. Dans ce contexte, la présente invention se propose de fournir un nouveau procédé du type ASP de récupération assistée du pétrole qui permette d'obtenir une injectivité satisfaisante de la solution alcaline de polymère dans le réservoir de pétrole. Pour plus de détails sur les procédés du type ASP, on pourra se référer notamment à l'article SPE 78711.

Aussi, l'invention concerne un procédé de récupération assistée du pétrole dans un gisement, tel que décrit dans la revendication 1, grâce à l'introduction dans le gisement d'une solution aqueuse alcaline d'un polymère hydrosoluble contenant un agent tensioactif caractérisé en ce que la solution aqueuse de polymère hydrosoluble introduite est préparée avec une solution aqueuse contenant initialement des ions Ca²⁺ et Mg²⁺ qui est traitée, préalablement à l'introduction du polymère et de l'agent tensioactif dans la solution aqueuse, avec un agent alcalin et un agent dispersant. Un tel prétraitement est réalisé de manière à précipiter sous l'action de l'agent alcalin et du CO₂ éventuellement dissout dans la solution aqueuse, les ions Ca²⁺ et Mg²⁺, notamment sous la forme de précipités de carbonate de calcium et d'hydroxyde de magnésium, et disperser lesdits précipités grâce à l'agent dispersant dont la nature et la quantité sont choisies pour limiter la taille des précipités formés, et notamment des précipités de carbonate de calcium et d'hydroxyde de magnésium formés.

Selon un mode de réalisation particulier, la solution aqueuse est préparée par traitement préalable d'une solution aqueuse contenant des ions Ca²⁺ et Mg²⁺ avec au moins un agent dispersant et au moins un agent alcalin, agitation de la solution aqueuse alcaline ainsi obtenue pendant un temps suffisant pour que la taille moyenne des 10%, en volume, des précipités les plus gros présents dans la solution aqueuse soit inférieure à 5µ, (on parle alors de précipitation optimale), puis introduction d'au moins un polymère hydrosoluble et d'au moins un agent tensioactif. Dans le cadre de l'invention, la taille des précipités est, par exemple, déterminée à l'aide de l'appareil Mastersizer 2000 de la société MALVERN avec un modèle mathématique basé sur la théorie de la diffusion de Mie.

Le plus souvent la solution polymérique injectée est directement préparée sur site, à proximité du gisement de pétrole dans laquelle elle va être utilisée. De l'eau épurée, mais aussi de l'eau de mer, de rivière, de barrage ou d'aquifère directement disponible sur le site peut directement être utilisée. Avant incorporation de l'agent dispersant et de l'agent alcalin, la solution aqueuse contient généralement de 50 à 2000 ppm d'ions Ca²⁺ et Mg²⁺, Le temps de mise en contact préalable est dépendant de la composition des eaux utilisées pour la préparation de la solution aqueuse de polymère à injecter. L'ordre d'addition de l'agent dispersant et de l'agent alcalin est sans importance. Ils pourront, par exemple, être introduits en même temps ou l'agent dispersant avant l'agent alcalin. Le temps d'agitation de la solution aqueuse alcaline, permettant d'obtenir une précipitation optimale sous forme dispersée des ions Ca²⁺ et Mg²⁺, varie, par exemple, de quelques dizaines de minutes à quelques heures et est, de préférence, supérieur ou égal à 1 heure. Il semble dans les cas testés qu'un temps de contact séparé d'une heure soit, le plus souvent, suffisant après une agitation rapide, soit dynamique, soit statique, au moment du mélange. Il est également possible de réaliser un premier traitement sous agitation rapide, puis de prolonger le traitement sous une agitation plus modérée. Le procédé selon l'invention peut être mis en place facilement avec du matériel, le plus souvent existant, de stockage d'eau notamment.

Dans le cadre de l'invention, il a été mis en évidence que le procédé de dispersion du Carbonate de Calcium formé peut être efficace, dans le cas d'un procédé ASP, pour éviter que les ions Ca²⁺ et Mg²⁺ forment des précipités à même de se déposer dans la zone d'introduction ou dans des zones plus profondes à l'intérieur du gisement et de limiter l'injectivité de la solution aqueuse de polymère hydrosoluble, à condition que le Carbonate de Calcium soit précipité et dispersé avant l'injection de la solution aqueuse de polymère hydrosoluble à l'intérieur du gisement, mais également avant l'introduction du polymère hydrosoluble et de l'agent tensioactif dans la solution aqueuse. Ceci semble lié au fait que le Carbonate de Calcium a une tendance à précipiter lentement et à rester un certain temps en sursaturation. Dans ce cas, la précipitation peut se concentrer sur des noyaux préexistants et les particules grossir, même en présence de dispersant, dans des zones à très faible vitesse et très faible cisaillement. Il y a alors une hétérogénéité très importante des particules qui bloquent rapidement l'injectivité.

De façon préférée, la quantité de dispersant doit être suffisamment élevée pour qu'il existe une quantité de dispersant libre dans la solution aqueuse contenant le polymère hydrosoluble qui va être injectée dans le gisement. De préférence, cette quantité doit être suffisamment élevée pour qu'il reste également de l'agent dispersant sous forme libre dans les eaux de production, c'est-à-dire dans les solutions aqueuses qui sont récupérées en sortie du gisement.

Les dispersants utilisables sont largement décrits dans la littérature. Dans le cadre de la présente invention, l'agent dispersant est choisi parmi :
- Les poly (métha)crylates et les copolymères avec l'acrylamide, acrylamido méthyl propane sulfonate de sodium, l'hydroxy propyl méthacrylate...
- Les polymères vinyliques, notamment de vinyle sulfonate de sodium, de méthallyl sulfonate de sodium, ou de leurs dérivés,
- Les homopolymères ou copolymères d'acide maléique ou d'un de ses dérivés,
- Les phosphonates comme l'acide phosphonobutane tricarboxilique (Dequest 7000), l'acide aminotriméthylène-phosphonique (ATMP) l'acide hydroxy-éthylidène-diphosphonique (HEDPA) ou son sel de sodium (HEDP Na₂), le dièthylène triamine penta méthylène phosphonique acide (DTPMPA)...
- Les lignosulfates.

Les agents dispersants, de nature polymérique, ci-dessus mentionnés présentent, en général, un poids moléculaire inférieur ou égal à 100 000 g/mol, notamment dans la gamme allant de 200 à 50 000 g/mol.

Jusqu'à ce jour, des dispersants ont été utilisés, par exemple, pour disperser le sulfate de baryum précipité par mélange d'eau de mer et d'eau de production avant injection, mais les quantités ajoutées étaient très limitées et de l'ordre de 5 à 20 ppm. Mais dans ce cas, le précipité est instantané sous forme de particules extra fines. Dans les cas d'un traitement ASP, ces quantités sont insuffisantes pour stabiliser le Carbonate de Calcium et empêcher sa cristallisation progressive. Ceci semble dû aux évolutions de solubilité tout au long de sa présence dans les champs. Sa solubilité évolue au cours du temps à cause de :
- La réaction avec les fonctions acides du pétrole qui fait évoluer le pH,
- La mise en équilibre avec les composés inorganiques (sable, argiles, sels minéraux...),
- L'équilibre CO₂ en fonction des températures et des pressions.
- La pression du champ.

Le facteur principal de bon fonctionnement est la précipitation du Carbonate de Calcium avec une taille de particule suffisamment faible de manière à éviter la diminution d'injectivité constatée avec l'addition d'un agent alcalin tel que le Carbonate de Sodium. La quantité de dispersant suffisante pour maintenir cette dispersion dans le champ se situe, le plus souvent, dans la gamme allant de 20 à 500 ppm dans des conditions normales d'ASP et plus particulièrement dans la gamme allant de 30 à 200 ppm (1 ppm correspondant à 1mg/L).

La sélection de l'agent dispersant optimum, dans le cadre de l'invention, se fait en fonction de l'eau utilisée dans la solution aqueuse qui va être injectée dans le champ, par exemple, grâce à des essais de laboratoire avec la solution alcaline utilisée contenant le dispersant, en évaluant, notamment, la taille des particules de Carbonate de Calcium formées. De tels essais peuvent être réalisés à partir d'une carotte du champ, de l'eau (ou saumure) utilisée pour la préparation de la solution aqueuse qui va être injectée et consistent en un ajout du dispersant dans la solution aqueuse contenant l'agent alcalin, puis une agitation modérée (environ 500 t/min avec une pâle de 5 cm) pendant 24 h à 50°C. On mesure, alors, la taille des particules obtenues avec un appareil type Mastersizer de Malvern et on peut classer les produits suivant leur efficacité. De façon avantageuse, la nature et la quantité d'agent dispersant sont sélectionnées de manière à ce que la taille moyenne des 10%, en volume, des précipités les plus gros soit inférieure à 5µ. La quantité de dispersant utilisée, correspond, par exemple, à la valeur déterminée par l'essai de laboratoire permettant d'avoir une taille moyenne des précipités formés les plus gros correspondant à 10% en volume de la totalité des précipités formés inférieure ou égale à 5 µ augmentée de 30%.

Ensuite, au cours du procédé de récupération du pétrole, il est possible d'ajuster la quantité de dispersant introduite dans la solution aqueuse. Par exemple, si la pression d'injection reste constante, alors il est possible de diminuer la quantité de dispersant. Si la pression d'injection augmente (plugging), alors il est préférable d'augmenter la quantité de dispersant. De tels ajustements des compositions des solutions injectées, au cours du temps, sont très courants pour les pétroliers.

Le procédé selon l'invention est adapté à tout type de polymères hydrosolubles, connus pour avoir un rôle d'épaississants et/ou classiquement utilisés dans les procédés de récupération du pétrole.

En particulier, le ou les polymère(s) hydrosoluble(s) présent(s) dans la solution aqueuse peu(ven)t, notamment, être tout type de polymères organiques synthétiques ou naturels solubles dans l'eau. Notamment, les polymères hydrosolubles décrits par la demanderesse dans la demande de brevet FR 2 932 470 pourront être présents dans la solution aqueuse injectée. Citons par exemple les polymères à base d'acrylamide. Le plus souvent, le polymère hydrosoluble utilisé présente un poids moléculaire supérieur ou égal à 1 million g/mol, notamment appartenant à la gamme allant de 1 à 25 millions g/mol. On préférera des polymères à base d'acrylamide (représentant, de préférence, au moins 10% en moles) copolymérisé avec au choix l'acide acrylique, l'acide 2-acrylamido-2-méthylpropane sulfonique ou la N-vinyl pyrrolidone.

La solution aqueuse pourra contenir, par exemple, une concentration en polymère hydrosoluble d'au plus 10 g/l, et préférentiellement d'au plus 5g/l de solution aqueuse dans laquelle il est injecté. Au final, de façon avantageuse, la solution aqueuse de polymère hydrosoluble obtenue présente une viscosité optimale appartenant à la gamme allant de 20 à 60 cps (centipoises), (mesures de viscosité à 20°C avec un viscosimètre Brookfield avec un module UL et à vitesse 6 rpm).

La solution aqueuse injectée contient, également, un ou plusieurs tensioactifs. Les tensioactifs peuvent, par exemple, être choisis parmi les tensioactifs anioniques et leurs zwittérions choisis dans le groupe comprenant les dérivés d'alkylsulfates, alkyléthersulfates, arylalkylsulfates, arylalkyléthersulfates, alkylsulfonates, alkyléthersulfonates, arylalkylsulfonates, arylalkyléthersulfonates, alkylphosphates, alkylétherphosphates, arylalkylphosphates, arylalkylétherphosphates, alkylphosphonates, alkylétherphosphonates, arylalkylphosphonates, arylalkylétherphosphonates, alkylcarboxylates, alkyléthercarboxylates, arylalkylcarboxylates, arylalkyléthercarboxylates, les polyéthers alkyles, et polyéthers arylalkyles. Dans le cadre de l'invention, on entend par « alkyle », un groupement hydrocarbonés, saturé ou insaturé, de 6 à 24 carbones, ramifiée ou non, linéaire ou éventuellement comportant un ou plusieurs motifs cycliques, pouvant éventuellement comporter un ou plusieurs hétéroatomes (O, N, S). On définit par groupement arylalkyle, un groupement alkyl tel que précédemment défini, comportant un ou plusieurs noyaux aromatiques, lesdits noyaux aromatiques pouvant éventuellement comporter un ou plusieurs hétéroatomes (O, N, S).

La solution aqueuse injectée est alcaline, avec un pH, notamment, appartenant à la gamme 8 à 12. Cette solution contient un ou plusieurs agents alcalins, par exemple choisis parmi les hydroxydes, les carbonates et les bicarbonates de métal alcalin ou d'ammonium, tels que le carbonate de sodium. Les quantités d'agent alcalin introduites dans la solution aqueuse correspondent généralement de 0,5 à 15 fois la masse totale de polymère hydrosoluble ultérieurement introduit dans la solution aqueuse.

Dans le cadre de l'invention, la solution aqueuse finale contenant le ou les polymères souhaités est ensuite injectée dans un gisement de pétrole, selon toute technique connue de l'homme de l'art dans les procédés de récupération assistée du pétrole également nommés « EOR ». En sortie du gisement, des eaux de production sont récupérées, avec le pétrole extrait. La préparation de la solution aqueuse injectée est, le plus souvent, réalisée sur site, juste en amont de son injection dans le gisement. Le traitement préalable de la solution aqueuse avec l'agent alcalin et l'agent dispersant pourra être réalisé, notamment dans une cuve de stockage, avec le mode d'agitation sélectionné, le plus souvent avec un agitateur mécanique. Ensuite, le polymère et l'agent tensioactif pourront être additionnés, ensemble ou séparément, dans la solution aqueuse, par exemple, sur une ligne de circulation de la solution aqueuse et, par exemple, pour le polymère, au moyen d'une unité telle que décrite dans la demande de brevet WO 2008/107492, et commercialisée par la demanderesse sous la référence PSU « Polymer Slicing Unit ».

Le procédé selon l'invention s'applique aux champs de perméabilité moyenne supérieure ou égale à 500 millidarcies. Néanmoins, chaque champ réinjectant des eaux de production contenant une certaine quantité de solides possède ses propres règles. La perméabilité moyenne est mesurée en utilisant la loi de Darcy et notamment la procédure décrite dans le document « Recommanded Practice for determining permeability of porous média », document RP27 de l' « American Petroleum Institut ». Elle caractérise l'aptitude d'un fluide à traverser une formation rocheuse.

Le procédé selon l'invention est également parfaitement adapté aux puits à faible et moyenne température, avec par exemple des copolymères acrylamide / acide acrylique jusqu'à environ 75°C, des copolymères acrylamide / monomères sulfonés jusqu'à 105°C, et des copolymères contenant de la polyvinylpyrrolidone jusqu'à 120°C.

Le procédé selon l'invention permet de maintenir une injectivité satisfaisante de la solution aqueuse dans le puits de pétrole, en évitant la formation de précipités de taille importante de Carbonate de Calcium à l'intérieur du gisement qui risqueraient d'obstruer certains passages. De façon avantageuse, le procédé selon l'invention ne comprends pas d'étape de complexation des ions Ca²⁺ ou Mg²⁺, ni d'étape d'adoucissement, comme décrit dans l'art antérieur.

Les essais de laboratoire ci-dessous permettent de mieux comprendre les mécanismes mis en oeuvre dans cette invention.

### A) Taille des particules

En prenant comme exemple une saumure d'un champ de pétrole ayant la composition suivante :
Na⁺ : 1872,4 mg/l
Cl⁻ : 2799,6 mg/l
Ca²⁺ : 46,8 mg/l
Mg²⁺ : 14 mg/l
K⁺ : 26,2 mg/l
HCO⁻₃: 409,6 mg/l
on a déterminé au laboratoire, par des essais d'injection sur des carottes (prélevées sur le champ de pétrole dont la perméabilité moyenne est de 1000 millidarcies et la porosité moyenne de 26%), une composition d'ASP potentielle. Cette composition est la suivante :
- Polymère 3630S (copolymère acide acrylique/acrylamide 30/70 % en mol, de poids moléculaire 20 millions g/mol) de la société SNF : 2200 ppm,
- Surfactant Petrostep® A - 1 (tensioactif anionique alkyle benzène sulfonate) fourni par Stepan : 4000 ppm,
- Carbonate de Sodium : 4000 ppm pour amener le pH à 10,5.

La porosité, exprimée en pourcentage, est le volume des vides (pores) dans la
roche par rapport au volume total de la roche.
1°) Dans une première procédure, on rajoute divers dispersants à une quantité de 100 ppm et on mesure, avec l'appareil Mastersizer 2000 de Malvern, la taille moyenne des particules de Carbonate de Calcium et des particules d'hydroxyde de Magnésium précipitées, ainsi que la taille des 10%, en volume, de particules les plus grosses et ceci après 24 heures à 50°C sous agitation.

Les résultats sont les suivants :

| | Poids moléculaire (PM en g/mol) | Taille Moyenne (µ) | Taille moyenne des 10% plus grosses (µ) |
|---|---|---|---|
| Polyacrylate Na | PM 3000 | 1,90 | 3,38 |
| Polyacrylate Na | PM 5000 | 2,17 | 4,80 |
| Polyacrylate Na | PM 1000 | 1,68 | 6,90 |
| Copolymère Acide maléique Acide acrylique | PM 2000 | 2,73 | 8,87 |
| Copolymère Acide | PM 2000 | 2,14 | 4,42 |
| Acrylique ATBS (Sodium Acryloyldimethyl Taurate) (70/30 % en mol) | | | |
| Copolymère Acide acrylique Hydroxy propylacrylate (80/20 % en mol) | PM 2000 | 3,57 | 7,55 |
| Polyanhydride maléique | PM 400 | 6,08 | 11,20 |
| ATMP | | 1,53 | 2,55 |
| HEDPA | | 2,52 | 4,71 |
| DTPMPA | | 1,77 | 5,65 |
| Mélange Polyacrylate ATMP (50/50 % en poids) | PM 3000 | 1,42 | 2,10 |

Il est possible d'effectuer une sélection sur l'ensemble des dispersants disponibles sur le marché en tenant compte de leur stabilité thermique en fonction de la température.

On s'aperçoit, par exemple, que le mélange Polyacrylate PM 3000 - ATMP garde sa taille de particules après 6 mois sous agitation faible.

### B) Répartition de taille de particules

Pour vérifier la nécessité de pré-précipiter le Carbonate de Calcium, l'essai suivant a été réalisé :
Sur un tube de diamètre ½ pouce de 300 mètres de long, une composition ASP telle que définie au paragraphe A) contenant 100 ppm de mélange Polyacrylate 3000 -ATMP (50/50) a été injectée (en un seul passage dans le tube en serpentin qui simule l'injection) à une vitesse de 3m/sec dans les conditions suivantes :
   1°) La saumure a été pompée directement dans le tube avec addition d'un mélange polymère - surfactant - Carbonate de sodium - Dispersant. Ensuite, la solution est récupérée et agitée au laboratoire à 500t/min (diamètre de pâle : 5 cm) pendant 24h à 50°C, puis, la taille des particules est mesurée.
   2°) La saumure a été traitée par le Carbonate de sodium en présence de dispersant pendant deux heures (30 minutes à 500 t/min, puis 90 minutes à 100 t/min), puis additionnée à des solutions de polymère et de surfactant et enfin pompée dans le même tube. De même, la taille de particule a été mesurée après 24 heures d'agitation à 500t/min à 50°C.
      *Dans le cas n°1 :*
         - La taille moyenne des particules est de 5,84 µm,
         - La taille moyenne des 10%, en volume, de particules les plus grosses est de 15,12 µm.
      *Dans le cas n°2 :*
         - La taille moyenne des particules est de 1,89 µm,
         - La taille moyenne des 10%, en volume, de particules les plus grosses est de 3,38 µm.

Il y a donc bien une différence de comportement et de cristallisation du Carbonate de Calcium entre une précipitation préalable séparée et une précipitation en présence de polymère et surfactant.

Par ailleurs, des tests ont montré que l'on pouvait poursuivre pendant 6 mois, le mélange dans le cas 2) sans pour autant que les particules grossissent.

Un test d'injectivité a également été réalisé sur une courte durée sur un puits du champ de pétrole (dont la perméabilité moyenne est de 1000 millidarcies et la porosité moyenne de 26%) correspondant à la saumure testée.

Le débit d'injection d'eau en Water- Flooding était de 27M³/h avec une pression de 77 bars (variable de 70-81 bars). La pression de fracturation estimée était de 85 bars.

La saumure et le dispersant et le carbonate de sodium (4000 ppm) ont été mélangés dans une première cuve de 2m³ sous forte agitation (pales de 0,60 mètre à 1000t/minute), puis stockés dans une cuve sous faible agitation pendant 12 heures.

Le polymère a été dissout à une concentration de 10 000 ppm dans cette saumure précipitée et le surfactant dilué deux fois avec cette même saumure pour être dosé en tête de puits et mélangés à travers des mélangeurs statiques haute efficacité aux taux déterminés par les essais de laboratoire.

Les constatations ont été les suivantes :
- La pression a progressivement baissé pendant 18 heures à 72 bars probablement à cause de l'effet de réduction des frottements du fluide dans le puits (en anglais « drag réduction »),
- Puis elle est remontée en 10 jours à 78 bars et a fluctué entre 74 et 80 bars durant les 60 jours qu'a duré l'injection avec 25 à 28 m³ / h de débit. Il n'y a pas eu de perte de filtrabilité constatée durant cette période.

## Revendications

1. Procédé de récupération assistée du pétrole dans un gisement grâce à l'introduction dans le gisement d'une solution aqueuse alcaline d'un polymère hydrosoluble contenant un agent tensioactif **caractérisé en ce que** la solution aqueuse de polymère hydrosoluble introduite est préparée avec une solution aqueuse contenant initialement des ions Ca²⁺ et Mg²⁺ dans laquelle sont incorporés, préalablement à l'introduction du polymère et de l'agent tensioactif dans la solution aqueuse, un agent alcalin et un agent dispersant, l'incorporation de l'agent dispersant et de l'agent alcalin étant réalisée de manière à précipiter sous l'action de l'agent alcalin et du CO₂ éventuellement dissout dans la solution aqueuse, les ions Ca²⁺ et Mg²⁺, et disperser lesdits précipités grâce à l'agent dispersant dont la nature et la quantité sont choisies pour limiter la taille des précipités formés,
l'agent dispersant étant choisi parmi :
- les poly (métha)crylates et les copolymères avec l'acrylamide, l'acrylamido méthyl propane sulfonate de sodium, l'hydroxy propyl méthacrylate,
- les polymères vinyliques,
- les homopolymères ou copolymères de l'acide maléique ou d'un de ses dérivés,
- les phosphonates,
- les lignosulfates,
et étant préalablement incorporé à la solution aqueuse de polymère hydrosoluble introduite en une quantité appartenant à la gamme allant de 30 à 500 ppm.

2. Procédé de récupération assistée du pétrole selon la revendication 1 **caractérisé en ce que** les précipités formés sont des précipités de carbonate de calcium et d'hydroxyde de magnésium.

3. Procédé de récupération assistée du pétrole selon la revendication 1 ou 2 **caractérisé en ce que** la solution aqueuse est préparée par incorporation préalable d'une solution aqueuse contenant des ions Ca²⁺ et Mg²⁺ avec au moins un agent dispersant et au moins un agent alcalin, agitation de la solution aqueuse alcaline ainsi obtenue pendant un temps supérieur ou égal à 1 heure pour que la taille moyenne des 10% en volume des précipités les plus gros présents dans la solution aqueuse soit inférieure à 5µ, (précipitation optimale), puis introduction d'au moins un polymère hydrosoluble et d'au moins un agent tensioactif.

4. Procédé de récupération assistée du pétrole selon l'une des revendications précédentes **caractérisé en ce que** la solution aqueuse alcaline de polymère hydrosoluble introduite dans le gisement contient de l'agent dispersant sous forme libre.

5. Procédé de récupération assistée du pétrole selon la revendication 4 caractérisé en ce les eaux de production récupérées en sortie du gisement contiennent de l'agent dispersant sous forme libre.

6. Procédé de récupération assistée du pétrole selon l'une des revendications précédentes **caractérisé en ce que** le gisement présente une perméabilité moyenne supérieure ou égale à 500 millidarcies.

7. Procédé de récupération assistée du pétrole selon l'une des revendications précédentes **caractérisé en ce qu'**est préalablement incorporée à la solution aqueuse de polymère hydrosoluble introduite, une quantité d'agent dispersant appartenant à la gamme allant de 30 à 200 ppm.

8. Procédé de récupération assistée du pétrole selon l'une des revendications précédentes **caractérisé en ce que** l'agent dispersant est choisi parmi :
- les polymères de vinyle sulfonate de sodium, de méthallyl sulfonate de sodium, ou de leurs dérivés, et
- l'acide phosphonobutane tricarboxilique, l'acide aminotriméthylène-phosphonique, l'acide hydroxy-éthylidène-diphosphonique et son sel de sodium et le dièthylène triamine penta méthylène phosphonique acide.

9. Procédé de récupération assistée du pétrole selon l'une des revendications précédentes **caractérisé en ce que** l'agent alcalin est choisi parmi les hydroxydes, les carbonates et les bicarbonates de métal alcalin ou d'ammonium.

10. Procédé de récupération assistée du pétrole selon l'une des revendications précédentes **caractérisé en ce que** l'agent alcalin est du carbonate de sodium.

11. Procédé de récupération assistée du pétrole selon l'une des revendications précédentes **caractérisé en ce que** l'agent alcalin est introduit dans la solution aqueuse, en une quantité correspondant à 0,5 à 15 fois la masse totale de polymère hydrosoluble ultérieurement introduite dans la solution aqueuse.

## Patentansprüche

1. Verfahren für die Rückgewinnung von Erdöl in einer Lagerstätte unterstützt durch das Einbringen einer wässrig-alkalischen Lösung eines wasserlöslichen Polymers in die Lagerstätte, wobei die Lösung ein Tensid beinhaltet, **dadurch gekennzeichnet, dass** die eingebrachte wässrige Lösung des wasserlöslichen Polymers mit einer zunächst Ca²⁺-Ionen und Mg²⁺-Ionen beinhaltenden wässrigen Lösung hergestellt wird, in welche vor dem Einbringen des Polymers und des Tensids in die wässrige Lösung ein alkalisches Mittel und ein Dispergiermittel eingebracht werden,
wobei das Einbringen des Dispergiermittels und des alkalischen Mittels derart erfolgt, dass unter Einwirkung des alkalischen Mittels und des CO₂, die gegebenenfalls in der wässrigen Lösung gelöst sind, die Ca²⁺- und Mg²⁺-Ionen ausgefällt werden und die Ausfällungen durch das Dispergiermittel dispergiert werden, dessen Art und Menge zur Begrenzung der Menge der gebildeten Ausfällungen gewählt werden,
wobei das Dispergiermittel ausgewählt wird aus:
- Poly(metha)crylaten und Copolymeren mit Acrylamid, Natriumacrylamidomethylpropansulfonat, Hydroxypropylmethacrylat,
- Vinylpolymeren,
- Homopolymeren oder Copolymeren der Maleinsäure oder einem ihrer Derivate,
- Phosphonaten,
- Ligninsulfonaten,
und vorher in die wässrige Lösung des wasserlöslichen Polymers eingebracht wird, welche in einer Menge im Bereich von 30 bis 500 ppm eingebracht wurde.

2. Verfahren für die unterstützte Rückgewinnung von Erdöl nach Anspruch 1, **dadurch gekennzeichnet, dass** die gebildeten Ausfällungen Calciumcarbonat- und Magnesiumhydroxid-Ausfällungen sind.

3. Verfahren für die unterstützte Rückgewinnung von Erdöl nach Anspruch 1 oder 2, **dadurch gekennzeichnet, dass** die wässrige Lösung hergestellt wird durch: zunächst Einbringen einer wässrigen Lösung, welche Ca²⁺- und Mg²⁺-Ionen mit mindestens einem Dispergiermittel und mindestens einem alkalischen Mittel beinhaltet, Rühren der so innerhalb eines Zeitraums von 1 Stunde oder mehr erhaltenen wässrig-alkalischen Lösung, damit die durchschnittliche Menge von 10 Volumenprozent der größten in der wässrigen Lösung vorhandenen Ausfällungen kleiner als 5µ, (optimale Ausfällung) ist, dann Einbringen von mindestens einem wasserlöslichen Polymer und von mindestens einem Tensid.

4. Verfahren für die unterstützte Rückgewinnung von Erdöl nach einem der vorangehenden Ansprüche, **dadurch gekennzeichnet, dass** die wässrig-alkalische Lösung des wasserlöslichen Polymers, welche in die Lagerstätte eingebracht wird, Dispergiermittel in freier Form enthält.

5. Verfahren für die unterstützte Rückgewinnung von Erdöl nach Anspruch 4, **dadurch gekennzeichnet, dass** das beim Austreten aus der Lagerstätte zurückgewonnene Produktionswasser Dispergiermittel in freier Form enthält.

6. Verfahren für die unterstützte Rückgewinnung von Erdöl nach einem der vorangehenden Ansprüche, **dadurch gekennzeichnet, dass** die Lagerstätte eine mittlere Permeabilität, welche höher als oder gleich 500 Millidarcy ist, aufweist.

7. Verfahren für die unterstützte Rückgewinnung von Erdöl nach einem der vorangehenden Ansprüche, **dadurch gekennzeichnet, dass** vorher eine Menge an Dispergiermittel im Bereich von 30 bis 200 ppm in die eingebrachte wässrige Lösung des wasserlöslichen Polymers eingebracht wird.

8. Verfahren für die unterstützte Rückgewinnung von Erdöl nach einem der vorangehenden Ansprüche, **dadurch gekennzeichnet, dass** das Dispergiermittel ausgewählt wird aus:
- Natriumvinylsulfonat-Polymeren, Natriummethallylsulfonat-Polymeren, oder deren Derivaten, und
- Phosphonobutantricarbonsäure, Aminotrimethylenphosphonsäure, Hydroxyethyliden-Diphosphonsäure und ihrem Natriumsalz und Diethylentriamin-Pentamethylenphosphonsäure.

9. Verfahren für die unterstützte Rückgewinnung von Erdöl nach einem der vorangehenden Ansprüche, **dadurch gekennzeichnet, dass** das alkalische Mittel aus Hydroxiden, Carbonaten und Bicarbonaten von Alkalimetall oder Ammonium ausgewählt wird.

10. Verfahren für die unterstützte Rückgewinnung von Erdöl nach einem der vorangehenden Ansprüche, **dadurch gekennzeichnet, dass** das alkalische Mittel Natriumcarbonat ist.

11. Verfahren für die unterstützte Rückgewinnung von Erdöl nach einem der vorangehenden Ansprüche, **dadurch gekennzeichnet, dass** das alkalische Mittel in die wässrige Lösung in einer Menge eingebracht wird, welche dem 0,5- bis 15-fachen der Gesamtmasse des wasserlöslichen Polymers, welches zu einem späteren Zeitpunkt in die wässrige Lösung eingebracht wird, entspricht.

## Claims

1. Process for the enhanced recovery of oil in a deposit owing to the introduction, into the deposit, of an alkaline aqueous solution of a water-soluble polymer containing a surfactant, **characterized in that** the aqueous solution of water-soluble polymer introduced is prepared with an aqueous solution initially containing Ca²⁺ and Mg²⁺ ions in which, prior to the introduction of the polymer and of the surfactant into the aqueous solution, an alkaline agent and a dispersant are incorporated, the incorporation of the dispersant and the alkaline agent being carried out so as to precipitate, under the action of the alkaline agent and of the CO₂ optionally dissolved in the aqueous solution, the Ca²⁺ and Mg²⁺ ions, and to disperse said precipitates owing to the dispersant, the nature and amount of which are chosen in order to limit the size of the precipitates formed, the dispersant being chosen from:
- poly(meth)acrylates and copolymers with acrylamide, sodium acrylamidomethylpropane sulphonate, hydroxypropyl methacrylate,
- vinyl polymers,
- homopolymers or copolymers of maleic acid or of one of its derivatives,
- phosphonates, and
- lignosulphates,
and being incorporated beforehand in the aqueous solution of water-soluble polymer introduced in an amount within the range extending from 30 to 500 ppm.

2. Enhanced oil recovery process according to Claim 1, **characterized in that** the precipitates formed are precipitates of calcium carbonate and magnesium hydroxide.

3. Enhanced oil recovery process according to Claim 1 or 2, **characterized in that** the aqueous solution is prepared by prior incorporation of an aqueous solution containing Ca²⁺ and Mg²⁺ ions with at least one dispersant and at least one alkaline agent, stirring the alkaline aqueous solution thus obtained for a time of greater than or equal to 1 hour so that the average size of 10% by volume of the largest precipitates present in the aqueous solution is less than 5 µ, (optimal precipitation), then introducing at least one water-soluble polymer and at least one surfactant.

4. Enhanced oil recovery process according to one of the preceding claims, **characterized in that** the alkaline aqueous solution of water-soluble polymer introduced into the deposit contains dispersant in free form.

5. Enhanced oil recovery process according to Claim 4, **characterized in that** the process waters recovered at the outlet of the deposit contain dispersant in free form.

6. Enhanced oil recovery process according to one of the preceding claims, **characterized in that** the deposit has a mean permeability greater than or equal to 500 millidarcies.

7. Enhanced oil recovery process according to one of the preceding claims, **characterized in that** an amount of dispersant within the range extending from 30 to 200 ppm is incorporated beforehand in the aqueous solution of water-soluble polymer introduced.

8. Enhanced oil recovery process according to one of the preceding claims, **characterized in that** the dispersant is chosen from:
- polymers of sodium vinyl sulphonate, of sodium methallyl sulphonate, or of derivatives thereof, and
- phosphonobutane tricarboxylic acid, amino trimethylene phosphonic acid, hydroxyethylidene diphosphonic acid and its sodium salt, and diethylene-triamine pentamethylene phosphonic acid.

9. Enhanced oil recovery process according to one of the preceding claims, **characterized in that** the alkaline agent is chosen from hydroxides, carbonates and bicarbonates of an alkali metal or of ammonium.

10. Enhanced oil recovery process according to one of the preceding claims, **characterized in that** the alkaline agent is sodium carbonate.

11. Enhanced oil recovery process according to one of the preceding claims, **characterized in that** the alkaline agent is introduced into the aqueous solution in an amount corresponding to 0.5 to 15 times the total mass of water-soluble polymer subsequently introduced into the aqueous solution.
